# EUROPÄISCHE PATENTSCHRIFT

(11) **EP 2 927 263 B1**
(45) Veröffentlichungstag und Bekanntmachung des Hinweises auf die Patenterteilung: **09.03.2016**
(21) Anmeldenummer: 14162997.2
(22) Anmeldetag: 01.04.2014
(51) Int. Cl.: C08G 69/26, C08K 7/14, C08L 77/06

(54) **Polyamid-Formmassen, insbesondere zur Herstellung von Formteilen im Trinkwasserbereich**
Polyamide moulding compositions, in particular for manufacturing moulded parts in the drinking water sector
Matière à mouler à base de polyamide, en particulier pour la fabrication de pièces moulées dans le domaine de l'eau potable

(43) Veröffentlichungstag der Anmeldung: 07.10.2015
(73) Patentinhaber: EMS-PATENT AG, 7013 Domat / Ems (CH)
(72) Erfinder: Hewel, Manfred, 7013 Domat/Ems (CH)
(74) Vertreter: Bremi, Tobias Hans

(56) Entgegenhaltungen:
- EP-A1- 2 650 331
- WO-A1-2009/055948
- WO-A1-2013/026779

## Beschreibung

### TECHNISCHES GEBIET

Die vorliegende Erfindung betrifft eine Polyamid-Formmasse, insbesondere zur Verwendung im Trinkwasserbereich, das heisst zur Herstellung von Formteilen mit verbesserter Zeitstand-Innendruckfestigkeit bei Temperaturen über Raumtemperatur und bei welchen beim bestimmungsgemässem Gebrauch die verarbeitete Formmasse in Kontakt mit Trinkwasser tritt.

### STAND DER TECHNIK

Teilkristalline teilaromatische Polyamide oder Copolyamide wurden für die Verwendung in Hochtemperaturumgebungen entwickelt und zeichnen sich, insbesondere bei einem Gehalt von mindestens 50 Mol-% teilaliphatischen Terephthalamideinheiten, durch ihre besonders guten thermo-mechanischen Eigenschaften aus. Der Schmelzpunkt derartiger Polyamide liegt typischerweise im Bereich von 270 bis 330°C.

Anspruchsvolle Anwendungen im Bereich Sanitär und insbesondere im Kontakt mit Trinkwasser fordern darüber hinaus einen hohen Berstdruck und eine hohe Zeitstand-Innendruckfestigkeit im Kontakt mit Wasser oder wasserhaltigen Medien. Dabei wird die Gebrauchstauglichkeit einer Kunststoffformmasse für ein Bauteil, wie z.B. ein Druckrohr, durch sein Langzeit-Verhalten unter hydrostatischer Beanspruchung bei Berücksichtigung der vorgesehenen Betriebsbedingungen bestimmt. Üblicherweise wird das Werkstoffverhalten durch die Umfangsspannung angegeben, bei der die zu erwartende Lebensdauer eines Rohres aus dem zu untersuchenden Kunststoff bei einer Umgebungstemperatur von 20°C und unter Verwendung von Wasser als Prüfmedium 50 Jahre beträgt. Neuere Entwicklungen zielen nun darauf ab, Formmassen zu generieren, deren Innendruckfestigkeit entweder für höhere Umfangsspannungen oder für höhere Temperaturen oder gegebenenfalls für beides ausgelegt ist.

Die meisten teilaromatischen Polyamide erfüllen diese Forderungen bei Temperaturen im Bereich von Raumtemperatur bis etwa 50°C, nicht aber für Temperaturen von 60°C oder darüber. So besitzen beispielsweise die Copolyamide PA 6T/66 oder PA 10T/1012 eine ungenügende Steifigkeit (Zug-E-Modul) und Zugfestigkeit bei 80°C im Kontakt zu Wasser oder wasserhaltigen Medien und erreichen nur eine geringe Zeitstand-Innendruckfestigkeit bei 80°C von weniger als 100 Stunden.

Werkstoffe, die in der Trinkwasserinstallation (Bedarfsgegenstände) eingesetzt werden, müssen in Anlehnung an DIN 1988 so beschaffen sein, dass das Trinkwasser in seiner Lebensmittelqualität nicht unzulässig beeinträchtigt wird.

Die Leitlinie zur hygienischen Beurteilung von organischen Materialien in Kontakt mit Trinkwasser (KTW-Leitlinie, Stand: 16.05.2007) beschreibt u.a. einen Warmwassertest bei (60 ± 2)°C und einen Heisswassertest bei (85 ± 2)°C (Durchführung des Migrationstests entsprechend DIN EN 12873-1: 2004 und -2: 2005) und legt konkrete Migrationsraten für die "Kohlenstoff-Abgabe" im Kontakt mit dem Trinkwasser fest. Der Richtwert bei der 7. Extraktion von 12.5 mg C/m²d darf dabei nicht überschritten werden. Die der Migrationsrate zugrundeliegende Kohlenstoff-Konzentration, die hierbei bestimmt wird, entspricht der Gesamtkonzentration an gelöstem organischen Kohlenstoff (total organic carbon oder kurz TOC) nach dem siebenten Extraktionszyklus.

In der Regel steigt die extrahierbare Stoffmenge und damit der TOC-Wert mit zunehmender Temperatur, so dass bei gleichem polymerem Werkstoff unterschiedliche Extraktwerte bei 23°C (kaltes Wasser), 60°C (warmes Wasser) und 85°C (heisses Wasser) erzielt werden. So haben einige Kunststoffe tiefe, KTW-konforme TOC-Werte bei Raumtemperatur, aber hohe TOC-Werte bei 60 oder 85°C, so dass sie nicht für den Warm- und Heisswasserbereich zugelassen werden.

EP-A-2 650 331 beschreibt eine faserverstärkte Polyamidmischung, enthaltend 10 bis 50 Gew.-% eines teilkristallinen Polyamids, bevorzugt eines aliphatischen Polyamids, 5 bis 30 Gew.-% eines amorphen Polyamids, 30 bis 65 Gew.-% faserförmige Füllstoffe sowie gegebenenfalls weitere Zusatzstoffe. Die Formmasse bzw. die daraus hergestellten Teile sollen eine geringe Verarbeitungsschwindung, eine gute Oberfläche, Dimensionsstabilität und eine geringe Migration ins Trinkwasser aufweisen. Die erfindungsgemässen Mischungen auf Basis von PA66 und amorphem PA 6I/6T (mit einem hohen Anteil an 6I-Einheiten) haben bei 80°C im Kontakt mit Wasser aber eine zu geringe Festigkeit und zu niedrigen Berstdruck und eine zu geringe Zeitstand-Innendruckfestigkeit, als dass sie für Trinkwasser-Anwendungen bei hoher Temperatur und hohem Druck geeignet und zugelassen wären. Die aufgeführten Trinkwassermigrationswerte gemäss Leitlinie zur hygienischen Beurteilung von organischen Materialien in Kontakt mit Trinkwasser (KTW-Leitlinie) des Umweltbundesamtes liegen mit 24.5 mg C/m²d über dem Limit von 12.5 mg C/m²d für die 7. Extraktion bei 60°C und mit 70.2 mg C/m²d über dem Limit von 12.5 mg C/m²d für die 7. Extraktion bei 85°C.

WO-A-2008/022910 beschreibt glasfaserverstärkte Polyamidformmassen auf Basis von Polyamiden mit einer Zahl an Aminoendgruppen von wenigstens 50 mmol/kg, die eine verbesserte Wärmealterungs- und Hydrolysebeständigkeit aufweisen sollen. Bevorzugt werden aliphatische Polyamide eingesetzt.

US-A-2003/0050376 beschreibt kupferstabilisierte teilaromatische Polyamid-Formmassen für Anwendungen im Maschinenbereich für Automobile mit verbesserter Beständigkeit gegen Wasser und Chemikalien. Die teilaromatischen Polyamide haben eine Aminoendgruppenkonzentration von höchstens 15 mmol/kg.

EP-A-0 827 976 betrifft eine hinsichtlich der thermisch-oxidativen Beständigkeit verbesserte Polyamid-Formmassen, die u.a. Kupferstabilisatoren enthält und wobei die Polyamide maximal 40 mmol/kg Carboxylendgruppen aufweisen.

JP-A-63-161021 betrifft Formmassen mit guter Wärmealterungsbeständigkeit, enthaltend teilaromatische Polyamide mit kontrolliert eingestellten Endgruppen. Die Differenz zwischen Carboxyl- und Aminoendgruppen beträgt mindestens 50 mmol/kg, wobei die Carboxylendgruppen stets überwiegen.

Die Dokumente des Standes der Technik offenbaren, wie oben gezeigt, im Hinblick auf die Verbesserung der Beständigkeit gegen Hydrolyse und Hitze widersprüchliche Lehren, wie eine solche Verbesserung zu erreichen sei. Einmal wird eine bessere Beständigkeit postuliert, wenn die Aminoendgruppen überwiegen, ein anderes Mal soll ein Carboxylendgruppenüberschuss für den gleichen Effekt sorgen. Andere Dokumente wiederum postulieren bestimmte Ober- oder Untergrenzen für Amino- und Carboxylendgruppen, ohne dass sich daraus ein schlüssiges Bild im Zusammenhang mit der Verbesserung der Beständigkeit teilaromatischer Polyamide im Kontakt zu Wasser ergibt.

Als allgemeiner Hintergrund sei weiter auf die WO2009055948 verwiesen, die die Verwendung einer Formmasse als Formteil für Trinkwasser mit folgenden Bestandteilen offenbart: (A) 30 bis 100 Gew. % Polyamidmischung, enthaltend ein aliphatisches, teilkristallines Homopolyamid oder Copolyamid und ein transparentes Homopolyamid oder Copolyamid oder eine Mischung solcher Polyamide und (B) zwischen 0 und 70 Gew. % Füll- und Verstärkungsstoffe, sowie gegebenenfalls Hilfs-und Zusatzstoffe.

Als allgemeiner Hintergrund sei weiter auf die die WO2013026779 verwiesen, die eine Polyamid-Zusammensetzung mit einem Metalloxid mit hoher Reflektivität im Formteil mit hohem Weissgrad und Reflexionsvermögen nach Wärmealterung offenbart, geeignet für LED-Anwendungen.

### DARSTELLUNG DER ERFINDUNG

Der Erfindung liegt u.a. die Aufgabe zugrunde, eine verbesserte Formmasse zur Herstellung eines Formkörpers für Trinkwasser zur Verfügung zu stellen, insbesondere eine verbesserte Formmasse, welche auch für den Kontakt mit Trinkwasser hoher Temperatur zugelassen werden kann und die, wenn zu einem Formkörper verarbeitet, eine Zeitstand-Innendruckfestigkeit gemäss ISO 1167-1 und ISO 1167-2 in Wasser bei 80°C und 45 bar Belastung von mindestens 1000 h, bevorzugt mindestens 1500 h besitzt. Darüber hinaus erreichen bevorzugt die Formmassen die für Trinkwasser geforderten Migrationslimiten für Heisswasseranwendungen (85°C, Dauergebrauch) und besitzen einen hohen Berstdruck bei 23°C, eine hohe Festigkeit/E-Modul bei 80°C, geringe Verarbeitungsschwindung, gute Oberfläche, hohe Dimensionsstabilität, und geringen Verzug.

Gelöst wird diese Aufgabe durch eine Polyamidformmasse, wie sie in den Ansprüchen definiert ist, respektive durch Formteile, wie sie in den Ansprüchen definiert werden. Konkret betrifft die vorliegende Erfindung eine Polyamidformmasse aus den folgenden Bestandteilen (A)-(F):
(A) 25 - 74.9 Gew.-% mindestens eines teilkristallinen, teilaromatischen Polyamids 6T/6I, gebildet aus:
   (a1) 65 bis 82 mol-% Terephthalsäure bezogen auf die Summe der eingesetzten Dicarbonsäuren;
   (a2) 18 bis 35 mol-% Isophthalsäure bezogen auf die Summe der eingesetzten Dicarbonsäuren;
   (a3) 1,6-Diaminohexan;
   (a4) mindestens einer monofunktionalen Carbonsäure;
   (a5) einer Phosphorverbindung.

Dabei sind die einzelnen Bestandteile der Komponente (A) in bestimmten Verhältnissen eingesetzt. Konkret gelten die oben angegebenen Bestandteile (a1)-(a5) mit folgenden Massgaben:
erste Massgabe: das Mol-Verhältnis der Komponente (a3) zur Summe der eingesetzten Dicarbonsäuren ((a1) + (a2)) ist wenigstens 1.04. D.h., bei der Polymerisation werden die Ausgangsstoffe so eingesetzt, dass ein wesentlicher Diamin-Überschuss vorhanden ist, wobei das Mol-Verhältnis der Komponente (a3) zur Summe der eingesetzten Dicarbonsäuren ((a1) + (a2)) höchstens 1.10 ist;
zweite Massgabe: das Mol-Verhältnis der Komponente (a4) zur Komponente (a3) im Bereich von 0.41-0.08 (d.h. 1-8 Mol-%) liegt. D.h., es gibt einen definierten Anteil an einer monofunktionalen Carbonsäure relativ zum Diamin-Anteil.

Durch diese beiden Maßgaben wird sichergestellt, dass bei der Herstellung des Systems 6T/6I eine ganz spezifische Regelung erfolgt und eine ganz spezifische Endgruppenstruktur entsteht, die unerwarteter Weise wesentlich dafür verantwortlich ist, dass die besonderen erfindungsgemäßen Eigenschaften resultieren.

Des Weiteren enthält die Polyamidformmasse folgende Komponenten:
(B) 25 - 60 Gew.-% faserförmige Verstärkungsstoffe (insbesondere Glasfasern zugelassen für Lebensmittelkontakt);
(C) 0 - 30 Gew.-% partikuläre Füllstoffe gemäss Anspruch 1;
(D) 0.1-2.0 Gew.-% Hitzestabilisatoren, mit der Massgabe, dass keine kupferhaltige Stabilisatoren darin enthalten sind;
(E) 0 - 2 Gew.-% Russ;
(F) 0 - 4 Gew.-% Hilfsstoffe und/oder Additive, verschieden von C, D und E;
wobei die Summe der Komponenten (A)-(E) 100 Gew.-% ausmacht.

Keines der erwähnten Dokumente des Standes der Technik beschreibt eine Polyamidformmasse mit der beanspruchten Zusammensetzung, geschweige denn die Eignung einer solchen Polyamidformmasse für den Bereich von Formteilen im Trinkwasserbereich, und die völlig anders gelagerten Verwendungen in diesen Dokumenten können eine solche Eignung auch nicht nahe legen. Insbesondere können sie den Fachmann nicht vermuten lassen, dass eine solche Formmasse dazu in der Lage ist, die für derartige Anwendungen hervorragende Zeitstand-Innendruckfestigkeit bei höherer Temperatur und niedrige TOC Werte zu erreichen.

Ein wesentliches Element der Erfindung besteht somit u.a. darin, erkannt zu haben, dass die vorgeschlagene spezifische Mischung in unerwarteter Weise tatsächlich zum einen eine hohe Zeitstand-Innendruckfestigkeit bei höheren Temperaturen und zum anderen einen sehr niedrigen TOC-Wert aufweisen kann und bei den angegebenen Verstärkungsgraden (Anteil von der Komponente B) immer noch sehr gut verarbeitet werden kann.

Bevorzugt handelt es sich bei der Komponente (A) um ein teilaromatisches Polyamid 6T/6I, aufgebaut aus Komponente (a1) 68 bis 78 mol-% Terephthalsäure, bevorzugt 69 bis 75 mol-% Terephthalsäure bezogen auf die Summe der eingesetzten Dicarbonsäuren ((a1) + (a2)).

Gemäß einer bevorzugten Ausführungsform liegt das Mol-Verhältnis der Komponente (a3) zur Summe der eingesetzten Dicarbonsäuren ((a1) + (a2)) im Bereich von 1.045-1.10, vorzugsweise im Bereich von 1.05-1.08, insbesondere vorzugsweise im Bereich von 1.055-1.075. Es gibt also wie bereits oben erwähnt einen wesentlichen Diamin-Überschuss.

Mit Komponente (a4) wird das Polyamid 6T/6I aufgebaut unter Zuhilfenahme mindestens einer aliphatischen oder cycloaliphatischen oder aromatischen monofunktionellen Carbonsäure, bevorzugt einer aromatischen Monocarbonsäure, wobei die Konzentration der monofunktionellen Carbonsäure im Bereich von 1 bis 8 Mol-%, bevorzugt 1 bis 5 mol-% oder 1.2 bis 3.0 und besonders bevorzugt im Bereich von 1.5 bis 2.5 Mol-% bezogen auf den Gehalt an Diamin liegt. Konkret bedeutet dies bevorzugtermassen, dass das Mol-Verhältnis der Komponente (a4) zur Komponente (a3) im Bereich von 0.01-0.08, vorzugsweise im Bereich von 0.012 bis 0.050 oder 0.014-0.030, insbesondere vorzugsweise im Bereich von 0.015-0.025 liegt.

Gemäß einer weiteren bevorzugten Ausführungsform der Erfindung ist die monofunktionelle Carbonsäure ausgewählt aus der Gruppe bestehend aus: Essigsäure, Propionsäure, Buttersäure, Valeriansäure, Capronsäure, Laurinsäure, Stearinsäure, 2-Ethylhexansäure, Cyclohexansäure und Benzoesäure oder Mischungen davon.

Das Mol-Verhältnis von monofunktioneller Carbonsäure zu Diaminüberschuss (Differenz zwischen Konzentration an Diamin und an Dicarbonsäuren) ist bevorzugt wenigstens 0.15 oder 0.20 und besonders bevorzugt wenigstens 0.25. Konkret bedeutet dies bevorzugtermassen, dass der Anteil der Komponente (a4) bezogen auf den Diaminüberschuss, verstanden als Differenz zwischen dem Anteil der Komponente (a3) in Mol und dem Anteil der Summe der Disäure-Komponenten (a1) und (a2) in Mol, im Bereich von 15 bis 100 mol-%, bevorzugt im Bereich von 20-80 mol-%, insbesondere bevorzugt im Bereich von 25 bis 50 mol-% liegt.

Das Polyamid 6T/6I wird aufgebaut unter Zuhilfenahme einer bevorzugt anorganischen oder organischen Phosphorverbindung, wobei der Phosphorgehalt bezogen auf den wasserfreien Ansatz (Summe aller Einwaagen ohne Wasser, d.h. Summe der Komponenten (a1) bis (a5)) im Bereich von 40 - 400 ppm (ppm jeweils gewichtsbezogen), bevorzugt 60 - 300 ppm und insbesondere im Bereich von 70 bis 150 ppm liegt. Bevorzugte Phorphorverbindungen sind Phosphorsäure, phosphorige Säure, hypophosphorige Säure, Phenylphosphonsäure, Phenylphosphinsäure und/oder deren Salze mit 1- bis 3-wertigen Kationen wie z.B. Na, K, Mg, Ga, Zn oder Al und/oder deren Ester wie Triphenylphosphat, Triphenylphosphit oder Tris-(nonylphenyl)-phosphit oder Mischungen davon handelt. Insbesondere bevorzugt werden die hypophosphorige Säure und Natriumhydrogenhypophosphit Monohydrat.

Hinsichtlich der Eigenschaften der späteren Verarbeitung erweist sich weiter als vorteilhaft, wenn das Polyamid (A) eine Lösungsviskosität (ηᵣₑₗ) zwischen 1.4 und 1.8, insbesondere bevorzugt zwischen 1.45 und 1.7, aufweist und/oder einen Glasübergangspunkt Tg oberhalb von 120°C, bevorzugt oberhalb von 125°C, insbesondere bevorzugt oberhalb von 130°C besitzt. Ebenfalls als vorteilhaft erweist es sich, wenn das teilkristalline Polyamid (A) eine Schmelztemperatur im Bereich von 300 - 330°C und eine Schmelzenthalpie im Bereich von 30-70 J/g, insbesondere im Bereich von 40-65 J/g hat. Die Polyamidformmasse enthält als **Komponente (B)** 25-60 Gew.-% faserförmige Verstärkungsstoffe. Vorzugsweise liegt die Komponente (B) in einem Anteil im Bereich von 30-60 Gew.-%, vorzugsweise im Bereich von 35-55 Gew.-% in der Polyamidformmasse vor.

Gemäß einer bevorzugten Ausführungsform werden die faserförmigen Verstärkungsstoffe der Komponente (B) in Form von Glasfasern eingesetzt, bevorzugt in Form von Glasfasern zugelassen für den Lebensmittelkontakt.

Die Glasfasern können z.B. in Form von sogenannten Kurzfasern (z.B. Schnittglas mit einer Länge von 0.2-20 mm) oder Endlosfasern (Rovings) verwendet werden. Die Glasfasern (B) können unterschiedliche Querschnittsflächen aufweisen, wobei Glasfasern mit kreisförmigem Querschnitt (runde Fasern) und mit nicht-kreisförmigem Querschnitt (flache Fasern) bevorzugt sind.

Glasfasern mit kreisförmigem Querschnitt, also runde Glasfasern, haben bevorzugtermassen einen Durchmesser im Bereich von 5-20 µm, bevorzugt im Bereich von 5-13 µm und besonders bevorzugt im Bereich von 6-10 µm. Sie werden bevorzugt als Kurzglasfaser (Schnittglas mit einer Länge von 0.2 bis 20 mm, bevorzugt 2-12 mm) eingesetzt.

Bei den flachen Glasfasern, also Glasfasern mit nicht-kreisförmiger Querschnittsfläche, werden bevorzugtermassen solche mit einem Abmessungsverhältnis von der Hauptquerschnittsachse zur senkrecht darauf stehenden Nebenquerschnittsachse von mehr als 2.5, bevorzugt im Bereich von 2.5 bis 6, insbesondere im Bereich von 3 bis 5 eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres bevorzugtes kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Glasquerschnittsfläche füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Vorzugsweise ist die Komponente (B) ausgewählt aus der Gruppe bestehend aus: E-Glasfasern (diese bestehen gemäss ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid; bevorzugt haben sie eine Dichte von 2.58±0.04 g/cm³, einen Zug-E-Modul von 70-75 GPa, eine Zugfestigkeit von 3000-3500 MPa und eine Reissdehnung von 4.5-4.8%), A-Glasfasern (63-72% Siliciumdioxid, 6-10% Calciumoxid, 14-16% Natrium- und Kaliumoxid, 0-6% Aluminiumoxid, 0-6% Boroxid, 0-4% Magnesiumoxid), C-Glasfasern (64-68% Siliciumdioxid, 11-15% Calciumoxid, 7-10% Natrium- und Kaliumoxid, 3-5% Aluminiumoxid, 4-6% Boroxid, 2-4% Magnesiumoxid), D-Glasfasern (72-75% Siliciumdioxid, 0-1% Calciumoxid, 0-4% Natrium- und Kaliumoxid, 0-1% Aluminiumoxid, 21-24% Boroxid), Basaltfasern (Mineralfaser mit der ungefähren Zusammensetzung: 52% SiO₂, 17% Al₂O₃, 9% CaO, 5% MgO, 5% Na₂O, 5% Eisenoxid sowie weiteren Metalloxiden), AR-Glasfasern (55-75% Siliciumdioxid, 1-10% Calciumoxid, 11-21% Natrium- und Kaliumoxid, 0-5% Aluminiumoxid, 0-8% Boroxid, 0-12%Titandioxid, 1-18% Zirkonoxid, 0-5% Eisenoxid) sowie Mischungen davon.

Eine bevorzugte Ausführungsform der Komponente (B) sind hochfeste Glasfasern beruhend auf dem ternären System Siliciumdioxid-Aluminiumoxid-Magnesiumoxid oder auf dem quaternären System Siliciumdioxid-Aluminiumoxid-Magnesiumoxid-Calciumoxid, wobei die Summe der Gehalte von Siliciumdioxid, Aluminiumoxid und Magnesiumoxid wenigstens 78 Gew.-%, bevorzugt wenigstens 87% und besonders bevorzugt wenigstens 92% bezogen auf die gesamte Glaszusammensetzung beträgt. Konkret wird bevorzugt eine Zusammensetzung von 58-70 Gew.-% Siliciumdioxid (SiO₂), 15-30 Gew.-% Aluminiumoxid (Al₂O₃), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO₂), Boroxid (B₂O₃), Titandioxid (TiO₂) oder Lithiumoxid (Li₂O) eingesetzt. In einer weiteren Ausführungsform besitzt die hochfeste Glasfaser eine Zusammensetzung von 60-67 Gew.-% Siliciumdioxid (SiO₂), 20-28 Gew.-% Aluminiumoxid (Al₂O₃), 7-12 Gew.-% Magnesiumoxid (MgO), 0-9 Gew.-% Calciumoxid (CaO) sowie 0-1.5 Gew.-% weitere Oxide, wie z.B. Zirkoniumdioxid (ZrO₂), Boroxid (B₂O₃), Titandioxid (TiO₂), Lithiumoxid (Li₂O).

Insbesondere ist bevorzugt, wenn die hochfeste Glasfaser die nachfolgende Zusammensetzung aufweist: 62-66 Gew.-% Siliciumdioxid (SiO₂), 22-27 Gew.-% Aluminiumoxid (Al₂O₃), 8-12 Gew.-% Magnesiumoxid (MgO), 0- 5Gew.-% Calciumoxid (CaO), 0-1 Gew.-% weitere Oxide, wie z.B. Zirkoniumdioxid (ZrO₂), Boroxid (B₂O₃), Titandioxid (TiO₂), Lithiumoxid (Li₂O).

Die hochfeste Glasfaser besitzt eine Zugfestigkeit von grösser oder gleich 3700 MPa, vorzugsweise von wenigstens 3800 oder 4000 MPa, eine Reissdehnung von mindestens 4.8%, vorzugsweise von wenigstens 4.9 oder 5.0 %, und einen Zug-E-Modul von grösser 75 GPa, vorzugsweise von mehr als 78 oder 80 GPa, wobei diese Glaseigenschaften an Einzelfasern (pristine single filament) mit einem Durchmesser von 10 µm und eine Länge von 12.7 mm bei einer Temperatur von 23°C und einer relativen Luftfeuchte von 50% zu bestimmen sind. Konkrete Beispiele für diese hochfesten Glasfasern der Komponente (B1) sind S-Glasfasern von Owens Corning mit 995-Schlichte, T-Glasfasern von Nittobo, HiPertex von 3B, HS4-Glasfasern von Sinoma Jinjing Fiberglass, R-Glasfaern von Vetrotex sowie S-1- und S-2-Glasfasern von AGY.

Die erfindungsgemäss z.B. als Roving eingesetzten Glasfasern (Endlosfasern) weisen bevorzugtermassen einen Durchmesser (bei runden Glasfasern) bzw. eine Nebenquerschnittsachse (bei flachen Glasfasern) von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen, d.h. ein Verhältnis von Haupt- zur Nebenquerschnittsachse von 2.5 bis 5. Die Endlosfasern können aus den oben beschriebenen Glassorten hergestellt sein, wobei Endlosfasern auf Basis von E-Glas und den hochfesten Glassorten bevorzugt sind. Diese Endlosfasern werden in die erfmdungsgemässen Polyamidformmassen durch bekannte Verfahren zur Herstellung von langfaserverstärktem Stäbchengranulat eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden.

Bevorzugt werden als Komponente (B) Glasfasern aus E-Glas, mit nicht-kreisförmigem Querschnitt (flache Fasern) und mit einem Achsenverhältnis der Hauptquerschnittsachse zur Nebenquerschnittsachse von wenigstens 2.5, und/oder hochfeste Glasfasern mit kreisförmigem oder nicht-kreisförmigem Querschnitt und einer Glaszusammensetzung, beruhend im Wesentlichen auf den Komponenten Siliciumdioxid, Aluminiumoxid und Magnesiumoxid, wobei der Anteil an Magnesiumoxid (MgO) 5-15 Gew.-% und der Anteil an Calciumoxid 0 - 10 Gew.-% beträgt.

Die Glasfasern der Komponente (B) weisen bevorzugt als flache E-Glasfasern eine Dichte von 2.54 - 2.62 g/cm³, einen Zug-E-Modul von 70 - 75 GPa, eine Zugfestigkeit von 3000 - 3500 MPa und eine Reissdehnung von 4.5 - 4.8% auf, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Die erfindungsgemässen Glasfasern können mit einer für Thermoplaste, insbesondere für Polyamid geeigneten Schlichte, enthaltend einen Haftvermittler auf Basis einer Amino- oder Epoxysilanverbindung, versehen sein.

Bevorzugt werden Glasfasern, die auch zukünftig für den Kontakt mit Lebensmittel oder Trinkwasser zugelassen sind. In diesem Zusammenhang sei auf die EU Verordnung 10/2011 für Lebensmittelzulassung und die BfR (Bundesamt für Risikobewertung) Empfehlung 52 für Trinkwasserkontakt verwiesen. Insbesondere werden Glasfasern bevorzugt, bei denen für die Gesamtmenge an Verarbeitungshilfsstoffen (insbesondere Schlichte) bezogen auf die Oberfläche der Glasfasern ein Wert von 0.25 g/m² nicht überschritten wird und/oder die Verarbeitungshilfsstoffe bevorzugtermassen ausschliesslich ausgewählt sind aus den Positivlisten der EU-Verordnung 10/2011 (Art. 22(4) in Verbindung mit der Liste gemäss Anhang I, die Liste in diesem Anhang I wird ausdrücklich in den Offenbarungsgehalt dieser Anmeldung mit eingeschlossen) und der BfR Empfehlung 52 vom 1.1.2012 (Zusatzstoffe für Füllstoffe).

Gemäß einer weiteren bevorzugten Ausführungsform kann die Formmasse als **Komponente (C)** weitere Füllstoffe enthalten. Bevorzugtermassen liegt die Komponente (C) in einem Anteil im Bereich von höchstens 20 Gew.-%, vorzugsweise im Bereich von höchstens 10 Gew.-%, insbesondere vorzugsweise im Bereich von 0.1-5 Gew.-% in der Polyamidformmasse vor.

Die partikulären Füllstoffe der Komponente (C) sind ausgewählt als Füllstoffe, gegebenenfalls in oberflächenbehandelter Form, ausgewählt aus der Gruppe bestehend aus: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln, gemahlenes Glas, insbesondere gemahlene Glasfasern, dauerhaft magnetische bzw. magnetisierbare Metallverbindungen und/oder Legierungen, sowie Mischungen der Elemente aus dieser Gruppe. Besonders bevorzugt als Füllstoff werden Mikroglaskugeln mit einem mittleren Durchmesser im Bereich von 5 bis 100 µm, da diese dem Formteil tendenziell isotrope Eigenschaften verleihen und damit die Herstellung von Formteilen mit niedrigem Verzug erlauben.

Als Füllstoff können die erfindungsgemässen thermoplastischen Formmassen vorzugsweise also einen teilchenförmigen Füllstoff oder eine Mischung aus zwei oder mehr unterschiedlichen Füllstoffen auch in Kombination mit Verstärkungsstoffen enthalten.

Des Weiteren enthält die vorgeschlagene Polyamidformmasse als **Komponente (D)** 0.1-2.0 Gew.-% Hitzestabilisatoren. Bevorzugtermassen liegt die Komponente (D) in einem Anteil im Bereich von 0.1-1.5 Gew.-%, insbesondere bevorzugt im Bereich von 0.2-1.0 Gew.-%, in der Polyamidformmasse vor.

Gemäß einer weiteren bevorzugten Ausführungsform sind die Hitzestabilisatoren der Komponente (D) ausgewählt aus der Gruppe der Phenol-basierten Hitzestabilisatoren, Phosphit-basierten Hitzestabilisatoren, Amin-basierten Hitzestabilisatoren, oder Mischungen oder Kombinationen davon, wobei insbesondere bevorzugt Komponente (D) ausgewählt ist aus der folgenden Gruppe: Triethylenglykol bis(3-tert-butyl-4-hydroxy-5-methylphenyl)propionat, Pentaerythritol Tetrakis(3-(3,5-di-tert-butyl-4-hydroxyphenyl)propionat), N,N'-Hexamethylen bis[3-(3,5-di-t-butyl-4-hydroxyphenyl)propionamid], Tris (2,4-di-tert-butylphenyl) phosphit, Tris (2,4-di-tert-butylphenyl)phosphit, oder Mischungen davon.

Da jede organische Stabilisierung eine mögliche C-Quelle hinsichtlich der TOC-Bestimmung gemäss KTW-Richtlinie darstellt, sollten höhere Konzentrationen an Stabilisatoren vermieden werden. Daher wird bevorzugt eine maximale Konzentration der Stabilisierungsadditive (Komponente D) von 0.5 Gew.-% bezogen auf die PolyamidMatrix eingehalten. Um also sicherzustellen, dass keine weiteren unerwünschten C-Quellen in der Polyamidformmasse enthalten sind, erweist es sich als vorteilhaft, wenn der Anteil an Komponente (D) möglichst gering gehalten wird, so beispielsweise indem die Polyamidformmasse höchstens 0.5 Gewichtsprozent an der Komponente (D) aufweist. Bevorzugte Stabilisatoren sind Phenol- und/oder Phosphit-Verbindungen, wie z.B. Irganox 245, Irganox 1010, Irganox 1098, Hostanox PAR 24 oder Irgafos 168. Besonders bevorzugt wird Irganox 1010 in einer Konzentration von gleich oder kleiner 0.5 Gew.-%. Des Weiteren kann die vorgeschlagene Polyamidformmasse als **Komponente (E)** Russ als Farbstoff in einem Anteil von nicht mehr als 2 Gew.-% enthalten. Gemäß einer bevorzugten Ausführungsform liegt der Anteil der Komponente (E) in der Formmasse im Bereich von 0.1-1.5 Gew.-%, vorzugsweise im Bereich von 0.4-1.0 Gew.-%.

Eine weitere bevorzugte Ausführungsform ist, dadurch gekennzeichnet, dass es sich beim Russ der Komponente (E) um für Lebensmittelkontakt oder für die Lebensmitteleinfärbung zugelassenen Russ handelt, wie dies insbesondere bevorzugt für die Zulassung vor der FDA vorgeschrieben wird (Federal Register Final Rule - 69FR 44927 July 28, 2004: Listing of Color Additives Subject to Certification; D & C Black No. 2). Dies bedeutet, dass es sich beim Russ vorzugsweise um partikulären Russ mit einer Oberfläche im Bereich von 200 - 260 m²/g (Stickstoff BET (Brunauer, Emmett, Teller)), und/oder einem totalen Arsen-Gehalt von nicht mehr als 3 mg/kg, und/oder einem totalen Blei-Gehalt von nicht mehr als 10 mg/kg, und/oder einem totalen Quecksilber-Gehalt von nicht mehr als 1 mg/kg, und/oder einem totalen Schwefel-Gehalt von nicht mehr als 0.65 %, und/oder einem totalen Gehalt an polyzyklischen aromatischen Kohlenwasserstoff (PAK) von nicht mehr als 0.5 mg/kg, und/oder einem totalen Gehalt von Benzo[e]pyren von nicht mehr als 0.005 mg/kg und/oder einem totalen Gehalt von Dibenz[a,h]anthracen von nicht mehr als 0.005 mg/kg handelt, wobei vorzugsweise alle diese Bedingungen gleichzeitig erfüllt werden.

Des Weiteren kann die vorgeschlagene Polyamidformmasse in Form der **Komponente (F)** Hilfsstoffe und/Additive in einem Gehalt von bis 4 Gew.-% enthalten. Bevorzugtermassen liegt der Anteil der Komponente (F) in der Formmasse im Bereich von 0.1-3 Gew.-%, vorzugsweise im Bereich von 0.2-2 Gew.-%.

Eine bevorzugte Ausführungsform der vorgeschlagenen Polyamidformmasse ist dadurch gekennzeichnet, dass die Hilfsstoffe und/oder Additive der Komponente (F) ausgewählt sind aus der folgenden Gruppe: aliphatische Polyamide, Kristallisations-Beschleuniger oder -Verzögerer, Fliesshilfsmittel, Gleitmittel, Entformungsmittel, Pigmente, Farbstoff- und Markierungsstoffe, Verarbeitungshilfsmittel, Antistatika, Residuen aus Polymerisationsverfahren wie Katalysatoren, Salze und deren Derivate. Bevorzugtermassen ist die Komponente (F) frei von teilaromatischen Polyamiden, insbesondere von amorphen teilaromatischen Polyamiden. Insbesondere ausgeschlossen ist bevorzugtermassen die Anwesenheit von amorphem Polyamid 6I/6T (molarer Anteil von T < 52 mol-%) in der Polyamidformmasse.

Im Rahmen der Additive sind beispielsweise auch Trägersubstanzen für den Russ der Komponente (E) zu verstehen, damit der Russ in Form eines Masterbatches in den Herstellungsprozess problemlos eingeführt werden kann. Eine solche Trägersubstanz ist vorzugsweise ein aliphatisches Polyamid, zum Beispiel Polyamid 66.

Wie bereits weiter oben erläutert, ist die vorgeschlagene Polyamidformmasse insbesondere dadurch gekennzeichnet, dass sie sich, wenn zu einem Formkörper verarbeitet, bevorzugt durch Spritzguss, Extrusion oder Blasformen, für die Lagerung oder Förderung von Trinkwasser bei erhöhter Temperatur, bevorzugt bei Temperaturen über 60°C±2°C, eignet. Sie zeichnet sich insofern spezifisch also dadurch aus, dass die gesamte Konzentration an gelöstem organischem Kohlenstoff bei der siebten Extraktion einen Wert von 12.5 mg C/m²d nicht überschreitet, die nach einem Verfahren bestimmt wird, wie es eingangs geschildert wurde. Eine weitere bevorzugte Ausführungsform der vorgeschlagenen Polyamidformmasse ist also konkret dadurch gekennzeichnet, dass die Polyamidformmasse, wenn zu einem Formkörper verarbeitet, für die Lagerung oder Förderung von Trinkwasser bei Temperaturen über 80°C, bevorzugt bei Temperaturen über 85°C±2°C ausgelegt und geeignet ist, wobei dabei insbesondere bevorzugt die gesamte Konzentration an gelöstem organischem Kohlenstoff bei der siebten Extraktion einen Wert für die Migrationsrate von 12.5 mg C/m²d nicht überschreitet.

Die erfindungsgemäßen thermoplastischen Formmassen zeichnen sich durch eine gute Zeitstand-Innendruckfestigkeit bei hohen Temperaturen und hohen Innendrücken, Dimensionsstabilität und Verarbeitungsstabilität sowie Trinkwassereignung aus. Diese Formmassen eignen sich daher zur Herstellung von Formkörpern jeglicher Art durch Spritzguss, Extrusion oder Blasformen für Anwendungen mit Kontakt zu Warmwasser oder warmen wasserhaltigen Medien, Lebensmittelkontakt oder Trinkwasseranwendungen, insbesondere Heißwasseranwendungen, wie z.B. Wasserzähler, Wasserzählergehäuse, Sanitärbauteile, Rohre, Leitungen, Rohrverbinder, Fittinge, z.B. für die Trinkwasseranwendung, Ventile, Armaturen, Haushaltsgeräte, Heisswasserbereiter, Reiskocher, Dampfgarer, Dampfbügeleisen, Teile für Tee- und Kaffeemaschinen. Ebenso sind die Formmassen geeignet zur Herstellung von Formkörpern im Kontakt mit Warmwasser in der Wasserversorgung, wie z.B. Warmwasserspeicher, und in Heiz- und Kühlsystemen. Bei den Heizsystemen seien insbesondere Öl-, Gas-, Holz- und Solarheizungen sowie Wärmepumpen und Raumheizungen genannt, bei den Kühlsystemen insbesondere Systeme im Automobilbau, wie z.B. Kühlwasserpumpen.

Die oben beschriebene Polyamidformmasse kann also, wenn entsprechend eingestellt, gemäss einer weiteren bevorzugten Ausführungsform, und wenn zu einem Formkörper verarbeitet, bevorzugt durch Spritzguss, Extrusion oder Blasformen, für die Lagerung oder Förderung von Trinkwasser bei Temperaturen über 80°C, bevorzugt bei Temperaturen über 85°C±2°C ausgelegt werden. Sie zeichnet sich insofern spezifisch dadurch aus, dass die gesamte Konzentration an gelöstem organischem Kohlenstoff bei der siebten Extraktion einen Wert von 12.5 mg C/m²d nicht überschreitet.

Entsprechend betrifft die vorliegende Erfindung zudem einen Formkörper zur Förderung und/oder Aufbewahrung von Trinkwasser, insbesondere bei erhöhten Temperaturen bevorzugtermassen im Bereich von oder oberhalb von 80°C. Der Formkörper kann dabei insbesondere die dreidimensionale Form folgender Strukturelemente annehmen: Rohre, Armatur, Fitting, Gehäuse, Mischer, Hahn, Filtergehäuse, Wasserzähler, Wasserzählerkomponente (Lager, Propeller, Pilone), Ventil, Ventilkomponente (Gehäuse, Absperrkugel, Schieber, Zylinder), Verteiler, Haushaltsgerät, Heisswasserbereiter, Reiskocher, Dampfgarer, Dampfbügeleisen, Kartusche, Pumpe, Pumpenkomponente (z.B. Schaufelräder, Impeller), Leitung oder Behälter respektive Bestandteil oder Element davon, hergestellt unter Verwendung einer Formmasse wie Sie oben beschrieben wurde. Bevorzugtermassen ist wenigstens ein Bereich, zum Beispiel in Form einer Beschichtung oder eines Abschnitts des Bauteils, dem Trinkwasser bei bestimmungsgemässem Gebrauch im Wesentlichen direkt ausgesetzt.

Des Weiteren betrifft die vorliegende Erfindung eine Verwendung einer Polyamidformmasse, wie sie oben beschrieben wurde, zur Herstellung eines Formkörpers, insbesondere eines Bauteils zur Förderung und/oder Aufbewahrung von Trinkwasser, insbesondere bei erhöhten Temperaturen bevorzugtermassen im Bereich von oder oberhalb von 80°C, insbesondere Armatur, Fitting, Gehäuse, Filtergehäuse, Hahn, Verteiler, Ventil, Ventilkomponente, Kartusche, Pumpe, Pumpenkomponente, Leitung oder Behälter respektive Bestandteil oder Element davon.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Ausführungsbeispiele beschrieben, die lediglich zur Erläuterung dienen und nicht einschränkend auszulegen sind.

### Beschreibung der Herstellung:

Die Herstellung der Polyamid-Formmassen nach den Ausführungsbeispielen erfolgt nach dem in EP 1 988 113 A1 beschriebenen Verfahren. Dabei wird insbesondere verwiesen auf das Verfahren, wie es in der EP-A 1 988 113 in Abs. [0038] sowie [0113]-[0120] beschrieben wird, hinsichtlich Herstellungsverfahren werden diese Textabschnitte ausdrücklich in den Offenbarungsgehalt dieser Anmeldung mit eingeschlossen. Monomere, Katalysator und Regler werden in die Anlage gegeben und ein Vorkondensat hergestellt. Das getrocknete Vorkondensat wird im Extruder nachkondensiert, mit Glasfasern und Additiven gemischt und granuliert. Aus den Granulaten werden Prüfkörper hergestellt und die Eigenschaften geprüft.

### Verwendete Materialien:

Irganox 1010: Pentaerythritoltetrakis-[3-(3,5-di-tert-butyl-4-hydroxyphenyl)-propionate, Antioxidans auf Basis eines sterisch gehinderten Phenols, erhältlich von Ciba Specialty Chemicals, Inc.
Glasfasern: Typ-A: Vetrotex 995 EC 10-4.5: E-Glas Durchmesser 10 µm (Querschnittsfläche rund), Länge 4.5 mm, erhältlich von Saint-Gobain Vetrotex, Frankreich; Typ-B: CPIC ECS 301HP: E-Glas, Durchmesser 10 µm (Querschnittsfläche rund), Länge 3 mm, mit Silanschlichte, erfüllt künftige Anforderungen für Lebensmittel- und Trinkwasserkontakt, erhältlich von Chongqing Polycomp International Corp. (CPIC)
Russ: Black Pearls 4750, hochreiner Russ für Lebensmittelkontakt, BET-Oberfläche 260 g/m², Cabot (25 Gew.-% als Masterbatch MB dispergiert in PA66)
Phosphinsäure: 50%ige H₃PO₂ (CAS-Nr. 6303-21-5), erhältlich bei FEBEX SA
Tafmer MC-201: Schlagzähmodifikator-Mischung aus mit Maleinsäureanhydrid gepfropften Ethylen-Propylen- und Ethylen-Butylen-Copolymeren, erhältlich von Mitsui.

Die Prüfkörper wurden auf einer Arburg Allrounder Spritzgussmaschine hergestellt, wobei die Zylindertemperaturen von 250°C bis 350°C und eine Schneckenumfangsgeschwindigkeit von 15 m/min eingestellt wurden. Die Formtemperatur wurde mit 120 - 160°C gewählt.

Die Messungen wurden nach folgenden Normen und an folgenden Prüfkörpern durchgeführt.
**Zug-E-Modul:** ISO 527 mit einer Zuggeschwindigkeit von 1 mm/min, ISO-Zugstab, Norm: ISO/CD 3167, Typ A1, 170 x 20/10 x 4 mm, Temperatur 23 °C.
**Bruchfestigkeit, Bruchdehnung, und Bruchenergie:** ISO 527 mit einer Zuggeschwindigkeit von 5 mm/min. ISO-Zugstab , Norm: ISO/CD 3167, Typ A1, 170 x 20/10 x 4 mm, Temperatur 23°C oder 80°C.
**Relative Viskosität:** DIN EN ISO 307, in 0,5 Gew.-%-iger m-Kresollösung, Temperatur 20 °C.
**Berstdruck:** Ein zylindrischer, einseitig verschlossener Spritzgusskörper (Innendurchmesser 31,6 mm; Wandstärke: 2 mm) wird mit Wasser gefüllt, mittels einer Hydraulikschnellkupplung in einem Berstdruckprüfstand montiert und mit 10 bar/s Druckanstieg einem Berstdruckversuch (Kurzzeit-Innendruckbelastung bis zum Versagen) bei 23°C unterzogen. In den Tabellen wird der maximal erreichte Druck (Mittelwert über 10 Proben) angegeben. Die Probekörper, die der Berstdruckbestimmung in nassem Zustand unterworfen wurden, wurden vorgängig einer Wasserlagerung (336 Stunden, 95°C) unterzogen, und unmittelbar nach Beendigung der Lagerung dem Berstdruckversuch zugeführt.
**Wasseraufnahme:** ISO-Zugstäbe werden bei einer Temperatur von 95°C für die Dauer von 336 Stunden in Wasser gelagert. Nach Abtrocknen der Oberfläche mit einem Baumwolltuch wird die prozentuale Gewichtszunahme in Bezug auf das Ausgangsgewicht (trockner ISO-Zugstab) bestimmt.
**Messung TOC-Wert:** 7. Migration: Nach Leitlinie zur hygienischen Beurteilung von organischen Materialien in Kontakt mit Trinkwasser (KTW-Leitlinie, Stand: 16.05.2007); Heisswassertest bei (85 ± 2)°C (Durchführung des Migrationstests entsprechend DIN EN 12873-1: 2004 und -2: 2005); es wurden je zwei identische Kontakt- und Blindversuche parallel ausgeführt; die Differenz der Mittelwerte von Mess- und Blindwert ergibt die gesuchte Kohlenstoffkonzentration; als Prüfkörper wurden Platten mit einer Oberfläche von 87.5 cm² eingesetzt, die bei einem O/V-Verhältnis von 2.5 dm⁻¹ je mit 350 ml Prüfwasser pro Migrationstest extrahiert wurden; der TOC wurde nach der NPOC-Methode mit dem Gerät TOC-V CPH von Shimadzu bestimmt.
**Zeitstand-Innendruckfestigkeit:** Auf Grundlage von ISO 1167-1 und 1167-2 wurde die Zeitdauer bestimmt, die spritzgegossene Probekörper mit einer freien Länge l₀ von 180 mm, einem Aussendurchmesser dₙ von 50 mm und einer Wandstärke von 3.7 mm bei einer Temperatur von 80°C und einem hydrostatischen Druck von 45 bar standhalten. Die Probekörper wurden dabei mit einer Endkappe des Typs A verschlossen und der Messanordnung "Innen Wasser, Aussen Luft" unterworfen. Die angegebene Zeitdauer entspricht dem Mittelwert aus 3 Einzelbestimmungen. Die Probenkörper wurden vor der Messung für 28 Tage bei 80°C in Wasser gelagert.

**Tabelle 1: Zusammensetzung des Basis-Polyamids 6T/6I, der Formmasse, und deren Eigenschaften, für Beispiele B1-B4.**

| Eigenschaft | Einheit | **B1** | **B2** | **B3** | **B4** |
|---|---|---|---|---|---|
| Polyamid-Typ | | 6T/6I | 6T/6I | 6T/6I | 6T/6I |
| TPS:IPS | Mol-% | 70/30 | 70/30 | 75/25 | 80/20 |
| 1,6-Hexandiamin | g | 3803 | 3803 | 3802 | 3802 |
| Terephthalsäure | g | 3590 | 3590 | 3846 | 4102 |
| Isophthalsäure | g | 1539 | 1539 | 1282 | 1026 |
| Phosphinsäure, 50% | g | 3.07 | 3.07 | 3.08 | 3.08 |
| Benzoesäure | g | 65.70 | 65.70 | 65.72 | 65.72 |
| Wasser | g | 3000 | 3000 | 3001 | 3001 |
| 1,6-Hexandiamin | Mol | 32.72 | 32.72 | 32.72 | 32.72 |
| Terephthalsäure | Mol | 21.61 | 21.61 | 23.15 | 24.69 |
| Isophthalsäure | Mol | 9.26 | 9.26 | 7.72 | 6.17 |
| Benzoesäure | Mol | 0.54 | 0.54 | 0.54 | 0.54 |
| Mol Diamin | Mol | 32.72 | 32.72 | 32.72 | 32.72 |
| Mol Disäure | Mol | 30.87 | 30.87 | 30.87 | 30.87 |
| Diamin/Disäure | Mol-Verhältnis | 1.060 | 1.060 | 1.060 | 1.060 |
| Mol (Benzoesäure) / Mol (Diamin) X | Mol-% | 1.64 | 1.64 | 1.64 | 1.64 |
| Phosphor/ Summe(Monomere) | ppm | 81 | 81 | 81 | 81 |
| **Polyamid** | Gew.-% | 58.5 | 48.55 | 58.5 | 58.5 |
| Irganox1010 | Gew.-% | 0.3 | 0.25 | 0.3 | 0.3 |
| Glasfaser Typ-B | Gew.-% | 40 | 50 | 40 | 40 |
| Russ-MB | Gew.-% | 1.2 | 1.2 | 1.2 | 1.2 |
| Relative Viskosität | | 1.696 | 1.688 | 1.609 | 1.644 |
| Wasseraufnahme, 336h in H₂O 95°C | Gew.-% | 2.76 | 2.21 | 2.8 | 2.51 |
| Zug-E-Modul, 23°C, trocken | MPa | 14150 | 18010 | 13920 | 14200 |
| Bruchfestigkeit, 23°C, trocken | MPa | 251 | 279 | 219 | 214 |
| Bruchdehnung, 23°C, trocken | % | 2.5 | 2.4 | 2.2 | 2 |
| Bruchenergie, 23°C, trocken | J | 10.6 | 12 | 8.1 | 6.9 |
| Zug-E-Modul, 23°C,nass | MPa | 14330 | 18280 | 14140 | 14580 |
| Bruchfestigkeit, | MPa | 208 | 234 | 189 | 190 |
| 23°C,nass | | | | | |
| Bruchdehnung, 23°C,nass | % | 3.9 | 2.2 | 2.4 | 2.1 |
| Bruchenergie, 23°C, nass | J | 10 | 10 | 8.5 | 7.4 |
| Zug-E-Modul, 80°C, trocken | MPa | 13110 | 16330 | 12620 | 12230 |
| Bruchfestigkeit, 80°C, trocken | MPa | 200 | 220 | 178 | 180 |
| Bruchdehnung, 80°C, trocken | % | 2.5 | 2.4 | 2.1 | 2.1 |
| Bruchenergie, 80°C, trocken | J | 6 | 6.5 | 4.3 | 4.3 |
| Zug-E-Modul, 80°C, nass | MPa | 6150 | 7770 | 7610 | 7810 |
| Bruchfestigkeit, 80°C, nass | MPa | 94 | 103 | 104 | 107 |
| Bruchdehnung, 80°C, nass | % | 5.7 | 4.7 | 4.6 | 4.1 |
| Bruchenergie, 80°C, nass | J | 8.1 | 7.1 | 7.3 | 6.7 |
| Zeitstand-Innendruckfestigkeit, 45bar, 80°C, H₂O | h | 1541 | 674 | 1850 | 1932 |
| TOC, 7. Extraktion | mg C/m²d | 8.5 | 9.5 | 9.1 | 8.8 |
| Berstdruck, trocken, 23°C | bar | 124 | n.b. | 128 | 132 |
| Berstdruck, nass, 23°C | bar | 117 | n.b. | 122 | 124 |

| | | | | | |
|---|---|---|---|---|---|
| *n.b.: nicht bestimmt* | | | | | |

**Tabelle 2: Zusammensetzung des Basis-Polyamids 6T/6I, der Formmasse, und deren Eigenschaften, für Vergleichsbeispiele B1-B6.**

| Eigenschaft | Einheit | **V1** | **V2** | **V3** | **V4** | **V5** | **V6** |
|---|---|---|---|---|---|---|---|
| Polyamid-Typ | | 6T/6I | 6T/6I | 6T/6I/6 | 6T/6I/6 | 10T/612 | 10T/6T |
| Monomer-Verhältnis | Mol-% | 70/30 | 70/30 | 73/19/8 | 73/19/8 | 80/20 | 82/18 |
| 1,6-Hexandiamin | g | 3729 | 3729 | 3379 | 3379 | 542 | 538 |
| 1,10-Decandiamin | g | | | | | 3303 | 3685 |
| Terephthalsäure | g | 3658 | 3658 | 3716 | 3716 | 2991 | 4077 |
| Isophthalsäure | g | 1568 | 1568 | 929 | 929 | | |
| 1,12-Dodecandisäure | g | | | | | 1008 | |
| Caprolactam | g | | | 892 | 892 | | |
| Natriumhypophosphit | g | 2.67 | 2.67 | | | | |
| Phosphinsäure, 50% | g | | | 11.50 | 11.50 | | 10.73 |
| Benzoesäure | g | 19.10 | 19.10 | 72.00 | 72.00 | 190.65 | 89.04 |
| Wasser | g | 3024 | 3024 | 3000 | 3000 | 3965 | 3600 |
| 1,6-Hexandiamin | Mol | 32.08 | 32.08 | 29.08 | 29.08 | 4.67 | 4.63 |
| 1,10-Decandiamin | Mol | | | | | 19.17 | 21.38 |
| Terephthalsäure | Mol | 22.02 | 22.02 | 22.37 | 22.37 | 18.00 | 24.54 |
| Isophthalsäure | Mol | 9.44 | 9.44 | 5.59 | 5.59 | | |
| 1,12-Dodecandisäure | Mol | | | | | 4.38 | |
| Caprolactam | Mol | | | 7.88 | 7.88 | | |
| Benzoesäure | Mol | 0.16 | 0.16 | 0.59 | 0.59 | 1.56 | 0.73 |
| Mol Diamin | Mol | 32.08 | 32.08 | 29.08 | 29.08 | 23.83 | 26.02 |
| Mol Disäure | Mol | 31.46 | 31.46 | 27.96 | 27.96 | 22.38 | 24.54 |
| Diamin/Disäure | Mol-Verhält nis | 1.020 | 1.020 | 1.040 | 1.040 | 1.065 | 1.060 |
| Mol (Benzoesäure) / Mol (Diamin) X | Mol-% | 0.49 | 0.49 | 2.03 | 2.03 | 6.22 | 2.80 |
| Phosphor / Summe(Monomere) | ppm | 87 | 87 | 303 | 303 | 0 | 304 |
| **Polyamid** | Gew.-% | 58.5 | 48.55 | 59.7 | 52.5 | 58.5 | 58.5 |
| Tafmer MC201 | Gew.-% | | | | 6 | | |
| Irganox1010 | Gew.-% | 0.3 | 0.25 | 0.3 | 0.3 | 0.3 | 0.3 |
| Glasfaser Typ-A | Gew.-% | | | 40 | | | 40 |
| Glasfaser Typ-B | Gew.-% | 40 | 50 | | 40 | 40 | |
| Russ-MB | Gew.-% | 1.2 | 1.2 | | 1.2 | 1.2 | 1.2 |
| Relative Viskosität | | 1.671 | 1.685 | 1.613 | 1.526 | 1.66 | 1.878 |
| Wasseraufnahme, 336h in H₂O 95°C | Gew.-% | 2.57 | 2.18 | 3.16 | 3.01 | 1.74 | 1.89 |
| Zug-E-Modul, 23°C, trocken | MPa | 14220 | 17710 | 14044 | 13080 | 12750 | 12780 |
| Bruchfestigkeit, 23°C, trocken | MPa | 255 | 275 | 232 | 194 | 193 | 213 |
| Bruchdehnung,23°C, trocken | % | 2.4 | 2.2 | 2.2 | 2.4 | 2.2 | 2.7 |
| Bruchenergie, 23°C, trocken | J | 10 | 11 | 5.9 | 8.8 | 7.6 | 7 |
| Zug-E-Modul, 23°C,nass | MPa | 14390 | 18180 | 12720 | 12170 | 11870 | 12138 |
| Bruchfestigkeit, 23°C,nass | MPa | 206 | 212 | 128 | 148 | 179 | 147 |
| Bruchdehnung, 23°C,nass | % | 2.1 | 1.7 | 1.5 | 2.6 | 2.5 | 1.7 |
| Bruchenergie, 23°C,nass | J | 7.9 | 6.4 | 2.5 | 8.4 | 8.8 | 2.9 |
| Zug-E-Modul, 80°C, trocken | MPa | 12640 | 16120 | 11540 | 10840 | 7300 | 9120 |
| Bruchfestigkeit, 80°C, trocken | MPa | 201 | 214 | 161 | 139 | 121 | 122 |
| Bruchdehnung,80°C, trocken | % | 2.4 | 2.1 | 2 | 2.1 | 4.3 | 3.1 |
| Bruchenergie, 80°C, trocken | J | 5.6 | 5.5 | 3.9 | 3.7 | 7.4 | 5.4 |
| Zug-E-Modul, 80°C, nass | MPa | 6320 | 7860 | 4400 | 4020 | 4750 | 6220 |
| Bruchfestigkeit, 80°C, nass | MPa | 90 | 91 | 45 | 64 | 82 | 77 |
| Bruchdehnung, 80°C, nass | % | 4.2 | 3.3 | 1.8 | 4.9 | 4.1 | 2.6 |
| Bruchenergie, 80°C, nass | J | 5.5 | 4.2 | 1.1 | 4.7 | 4.6 | 2.9 |
| Zeitstand-Innendruckfestigkeit, 45bar, 80°C, H₂O | h | 436 | 170 | 0.01 | 3.4 | 120 | n.b. |
| TOC, 7. Extraktion | mg C/m²d | 9.4 | 10.7 | n.b. | n.b. | n.b. | 6.7 |
| Berstdruck, trocken, 23°C | bar | 117 | n.b. | n.b. | 120 | 93 | n.b. |
| Berstdruck, nass, 23°C | bar | 100 | n.b. | n.b. | 90 | 67 | n.b. |

Anhand der Messungen sind vor allem folgende Effekte erkennbar, die die Formteile hergestellt aus den Formmassen nach der Erfindung (B1-B4) unerwartet und wesentlich unterscheiden von den nicht entsprechend der Erfindung ausgestalteten Vergleichsbeispielen (V1-V6):
Es zeigt sich, dass die mechanischen Eigenschaften (Zug-E-Modul, Bruchfestigkeit, Bruchdehnung, Bruchenergie) für zunehmende Wasseraufnahme und/oder zunehmende Temperatur bei den erfindungsgemäßen Formmassen in einer Gesamtschau wesentlich besser sind, ein Effekt der sich nicht durch eine Korrelation mit der effektiven Wasseraufnahme erklären lässt.

Ganz besonders treten aber die Werte für die Zeitstand-Innendruckfestigkeit in den Vordergrund. Wie die Messungen an den Formmassen gemäß der Erfindung zeigen sind die entsprechenden Werte der Zeitstand-Innendruckfestigkeit um Größenordnungen besser als bei den Vergleichsformmassen.

Durch Einsatz eines Diaminüberschusses von 1.06 und Benzoesäure von 1.64% in den Beispielen B1 und B2 statt einem Diaminüberschuss von 1.02 und 0.49% Benzoesäure in den Vergleichsbeispielen V1 und V2 liess sich bei identischer Zusammensetzung PA6T/6I 70/30 die Zeitstandinnendruckfestigekeit von 436h und 170h auf 1541h und 674 h steigern. Gleichzeitig steigt die Bruchfestigkeit nass bei 80°C von 90 und 91 MPa auf 94 und 103 MPa und Bruchenergie von 5.5 und 4.2 auf 8.1 und 7.1 J, obwohl die mechanischen Eigenschaften trocken bei Raumtemperatur praktisch identisch sind und sich die relativen Viskositäten mit 1.696 und 1.688 statt 1.671 und 1.685 fast nicht unterscheiden.

Die beiden Beispiele B3 und B4 zeigen, dass sich die Bruchfestigkeit nass bei 80°C durch Änderung des 6T/6I-Verhältnisses noch erhöhen lässt. Ebenfalls steigt die Zeitstand-Innendruckfestigkeit weiter an. Bei Raumtemperatur trocken und nass, sowie bei 80°C trocken sind die beiden Produkte B3 und B4 nicht steifer und nicht fester als B1. Erst bei den Einsatzbedingungen 80°C nass haben B3 und B4 einen höheren Modul und eine höhere Festigkeit als B1.

Bei dem Einsatz von Monomeren, die die Wasseraufnahme erhöhen, wie zum Beispiel Caprolactam in den Vergleichsbeispielen V3 und V4 wird die Festigkeit bei 80°C nass stark reduziert. Durch Einsatz von Schlagzähmodifikator lässt sich zwar die Festigkeit und die Bruchenergie erhöhen, die Zeitstand-Innendruckfestigkeit bleibt aber auf dem tiefen Niveau von 3.4 h.

Durch den Einsatz von langkettigen Monomeren wie in den Beispielen V5 und V6 wird die Wasseraufnahme sehr stark reduziert, gleichzeitig sinkt aber bereits bei 23°C der Modul und die Festigkeit. Die Festigkeit bei 80°C im nassen Zustand ist ungenügend für eine gute Zeitstand-Innendruckfestigkeit.

## Patentansprüche

1. Polyamidformmasse aus den folgenden Bestandteilen:
(A) 25 - 74.9 Gew.-% mindestens eines teilkristallinen, teilaromatischen Polyamids 6T/6I, gebildet aus:
(a1) 65 bis 82 mol-% Terephthalsäure bezogen auf die Summe der eingesetzten Dicarbonsäuren;
(a2) 18 bis 35 mol-% Isophthalsäure bezogen auf die Summe der eingesetzten Dicarbonsäuren;
(a3) 1,6-Diaminohexan;
(a4) mindestens einer monofunktionalen Carbonsäure;
(a5) 40 bis 400 ppm Phosphor, Masse-bezogen auf die wasserfreie Einwaage der Summe der Komponenten (a1) bis (a5), in Form einer Phosphorverbindung;
mit der ersten Massgabe, dass das Mol-Verhältnis der Komponente (a3) zur Summe der eingesetzten Dicarbonsäuren ((a1) + (a2)) wenigstens 1.04 und höchstens 1.10 ist;
und mit der zweiten Massgabe, dass das Mol-Verhältnis der Komponente (a4) zur Komponente (a3) im Bereich von 0.01-0.08 liegt;
(B) 25 - 60 Gew.-% faserförmige Verstärkungsstoffe;
(C) 0 - 30 Gew.-% partikuläre Füllstoffe, gegebenenfalls in oberflächenbehandelter Form, ausgewählt aus der Gruppe bestehend aus: Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln, gemahlenes Glas, dauerhaft magnetische oder magnetisierbare Metallverbindungen und/oder Legierungen, sowie Mischungen der Elemente aus dieser Gruppe;
(D) 0.1-2 Gew.-% Hitzestabilisatoren, mit der Massgabe, dass keine kupferhaltige Stabilisatoren darin enthalten sind;
(E) 0 - 2 Gew.-% Russ;
(F) 0 - 4 Gew.-% Hilfsstoffe und/oder Additive, verschieden von C, D und E; wobei die Summe der Komponenten (A)-(E) 100 Gew.-% ausmacht.

2. Polyamidformmasse nach Anspruch 1, **dadurch gekennzeichnet, dass** das Mol-Verhältnis der Komponente (a3) zur Summe der eingesetzten Dicarbonsäuren ((a1) + (a2)) im Bereich von 1.045-1.10, vorzugsweise im Bereich von 1.05-1.08, insbesondere vorzugsweise im Bereich von 1.055-1.075 liegt.

3. Polyamidformmasse nach einem der vorhergehenden Ansprüche, **dadurch gekennzeichnet, dass** das Mol-Verhältnis der Komponente (a4) zur Komponente (a3) im Bereich von 0.01-0.08, vorzugsweise im Bereich von 0.012-0.050 oder im Bereich von 0.014-0.030, insbesondere vorzugsweise im Bereich von 0.015-0.025 liegt.
und/oder dass der Anteil der Komponente (a4) bezogen auf den Diaminüberschuss, verstanden als Differenz zwischen dem Anteil der Komponente (a3) in Mol und dem Anteil der Summe der Disäure-Komponenten (a1) und (a2) in Mol, im Bereich von 15 bis 100 mol-%, bevorzugt im Bereich von 20-80 mol-%, insbesondere bevorzugt im Bereich von 25 bis 50 mol-% liegt.

4. Polyamidformmasse nach einem der vorhergehenden Ansprüche, **dadurch gekennzeichnet, dass** die Komponente (A) als Komponente (a1) 68 bis 78 mol-% Terephthalsäure, bevorzugt 69 bis 75 mol-% Terephthalsäure bezogen auf die Summe der eingesetzten Dicarbonsäuren ((a1) + (a2)) enthält.

5. Polyamidformmasse nach einem der vorhergehenden Ansprüche, **dadurch gekennzeichnet, dass** die Komponente (A) als Komponente (a5) eine Phosphorverbindung, bevorzugt in Form einer Phosphorsäure, phosphorigen Säure, hypophosphorigen Säure, Phenylphosphonsäure, Phenylphosphinsäure und/oder deren Salze mit 1- bis 3-wertigen Kationen und/oder deren Ester wie insbesondere Triphenylphosphat, Triphenylphosphit oder Tris-(nonylphenyl)-phosphit oder Mischungen davon enthält, wobei der Phosphorgehalt dieser Komponente (a5) bezogen auf den wasserfreien Ansatz, verstanden als Summe aller Einwaagen für Komponente (A) ohne Wasser, im Bereich von 60 - 300 ppm und insbesondere vorzugsweise im Bereich von 70 bis 150 ppm liegt.

6. Polyamidformmasse nach einem der vorhergehenden Ansprüche, **dadurch gekennzeichnet, dass** die monofunktionellen Carbonsäure der Komponente (a4) eine aliphatische oder cycloaliphatische oder aromatische Monocarbonsäure, wobei die monofunktionelle Carbonsäure vorzugsweise ausgewählt ist aus der Gruppe bestehend aus: Essigsäure, Propionsäure, Buttersäure, Valeriansäure, Capronsäure, Laurinsäure, Stearinsäure, 2-Ethylhexansäure, Cyclohexansäure und Benzoesäure, oder Mischungen davon.

7. Polyamidformmasse nach einem der vorhergehenden Ansprüche, **dadurch gekennzeichnet, dass** die faserförmigen Verstärkungsstoffe der Komponente (B) in Form von Glasfasern, bevorzugt in Form von Glasfasern zugelassen für den Lebensmittelkontakt verwendet werden, wobei bevorzugt die Gesamtmenge an Verarbeitungshilfsstoffen der Glasfasern, insbesondere der Schlichte, bezogen auf die Oberfläche der Glasfasern ein Wert von 0.25 g/m² nicht überschreitet und/oder die Verarbeitungshilfsstoffe bevorzugtermassen ausschliesslich ausgewählt sind aus der Positivliste gemäss Anhang I der EU-Verordnung 10/2011,
und/oder dass die Komponente (B) in einem Anteil im Bereich von 30-60 Gew.-%, vorzugsweise im Bereich von 35-55 Gew.-% in der Polyamidformmasse vorliegt.

8. Polyamidformmasse nach einem der vorhergehenden Ansprüche, **dadurch gekennzeichnet, dass** die Komponente (C) in einem Anteil im Bereich von höchstens 20 Gew.-%, vorzugsweise im Bereich von höchstens 10 Gew.-%, insbesondere vorzugsweise im Bereich von 0.1-5 Gew.-% in der Polyamidformmasse vorliegt.

9. Polyamidformmasse nach einem der vorhergehenden Ansprüche, **dadurch gekennzeichnet, dass** die Hitzestabilisatoren der Komponente (D) ausgewählt sind aus der Gruppe der Phenol-basierten Hitzestabilisatoren, Phosphit-basierten Hitzestabilisatoren, Amin-basierten Hitzestabilisatoren, oder Mischungen oder Kombinationen davon, wobei insbesondere bevorzugt Komponente (D) ausgewählt ist aus der folgenden Gruppe: Triethylenglykol bis(3-tert-butyl-4-hydroxy-5-methylphenyl)propionat, Pentaerythritol Tetrakis(3-(3,5-di-tert-butyl-4-hydroxyphenyl)propionat), N,N'-Hexamethylen bis[3-(3,5-di-t-butyl-4 - hydroxyphenyl)propionamid], Tris (2,4-di-tert-butylphenyl) phosphit, Tris (2,4-di-tert-butylphenyl)phosphit, oder Mischungen davon;
und/oder dass die Komponente (D) in einem Anteil im Bereich von 0.1-1.5 Gew.-%, insbesondere bevorzugt im Bereich von 0.2-1.0 Gew.-%, in der Polyamidformmasse vorliegt.

10. Polyamidformmasse nach einem der vorhergehenden Ansprüche, **dadurch gekennzeichnet, dass** es sich beim Russ der Komponente (E) um für Lebensmittelkontakt oder für die Lebensmitteleinfärbung zugelassenen Russ handelt, vorzugsweise um partikulären Russ mit
einer Oberfläche im Bereich von 200 - 260 m²/g (Stickstoff BET (Brunauer, Emmett, Teller)),
oder einem totalen Arsen-Gehalt von nicht mehr als 3 mg/kg,
oder einem totalen Blei-Gehalt von nicht mehr als 10 mg/kg,
oder einem totalen Quecksilber-Gehalt von nicht mehr als 1 mg/kg,
oder einem totalen Schwefel-Gehalt von nicht mehr als 0.65 %,
oder einem totalen Gehalt an polyzyklischen aromatischen Kohlenwasserstoff (PAK) von nicht mehr als 0.5 mg/kg,
oder einem totalen Gehalt von Benzo[e]pyren von nicht mehr als 0.005 mg/kg oder einem totalen Gehalt von Dibenz[a,h]anthracen von nicht mehr als 0.005 mg/kg
oder einer Kombination mehrerer dieser Eigenschaften;
und/oder dass der Anteil der Komponente (E) in der Formmasse im Bereich von 0.1-1.5 Gew.-%, vorzugsweise im Bereich von 0.4-1.0 Gew.-% liegt.

11. Polyamidformmasse nach einem der vorhergehenden Ansprüche, **dadurch gekennzeichnet, dass** die Hilfsstoffen und/oder Additive der Komponente (F) ausgewählt sind aus der folgenden Gruppe: aliphatische Polyamide, Kristallisations-Beschleuniger oder -Verzögerer, Fliesshilfsmittel, Gleitmittel, Entformungsmittel, Pigmente, Farbstoff- und Markierungsstoffe, Verarbeitungshilfsmittel, Antistatika, Residuen aus Polymerisationsverfahren wie Katalysatoren, Salze und deren Derivate, wobei vorzugsweise die Komponente (F) frei ist von teilaromatischen Polyamiden, insbesondere von amorphen teilaromatischen Polyamiden wie Polyamid 6I/6T,
und/oder dass der Anteil der Komponente (F) in der Formmasse im Bereich von 0.1-3 Gew.-%, vorzugsweise im Bereich von 0.2-2 Gew.-% liegt.

12. Polyamidformmasse nach einem der vorhergehenden Ansprüche, **dadurch gekennzeichnet, dass** die Polyamidformmasse, wenn zu einem Formkörper verarbeitet, bevorzugt durch Spritzguss, Extrusion oder Blasformen, für die Lagerung oder Förderung von Trinkwasser bei Temperaturen über 80°C, bevorzugt bei Temperaturen über 85°C±2°C ausgelegt ist, wobei dabei insbesondere bevorzugt die gesamte Konzentration an gelöstem organischem Kohlenstoff bei der siebten Extraktion einen Wert für die Migrationsrate von 12.5 mg C/m²d nicht überschreitet.

13. Formkörper, bevorzugt hergestellt durch Spritzguss, Extrusion oder Blasformen, zur Förderung und/oder Aufbewahrung von Trinkwasser oder für Verwendungen im Kontakt mit Kalt und/oder Warmwasser in der Wasserversorgung, wie insbesondere Warmwasserspeicher, und in Heiz- und Kühlsystemen, insbesondere Öl-, Gas-, Holz- und Solarheizungen sowie Wärmepumpen und Raumheizungen, insbesondere für Systeme im Automobilbau, wie Kühlwasserpumpen, insbesondere Formkörper zur Förderung und/oder Aufbewahrung von Trinkwasser bei erhöhten Temperaturen bevorzugtermassen im Bereich von oder oberhalb von 80°C, insbesondere Rohr, Armatur, Haushaltsgerät, Heisswasserbereiter, Reiskocher, Dampfgarer, Dampfbügeleisen, Fitting, Gehäuse, Mischer, Hahn, Filtergehäuse, Wasserzähler, Wasserzählerkomponente (Lager, Propeller, Pilone), Ventil, Ventilkomponente (Gehäuse, Absperrkugel, Schieber, Zylinder), Verteiler, Kartusche, Pumpe, Pumpenkomponente (z.B. Schaufelräder, Impeller), Leitung oder Behälter respektive Bestandteil oder Element davon, hergestellt unter Verwendung einer Formmasse nach einem der Ansprüche 1-12.

14. Formkörper nach Anspruch 13, **dadurch gekennzeichnet, dass** wenigstens ein Bereich, bevorzugtermassen in Form einer Beschichtung oder eines Abschnitts, dem Trinkwasser bei bestimmungsgemässem Gebrauch im Wesentlichen direkt ausgesetzt ist.

15. Verwendung einer Polyamidformmasse nach einem der Ansprüche 1-12 zur Herstellung eines Formkörpers, insbesondere eines Bauteils zur Förderung und/oder Aufbewahrung von Trinkwasser oder für Verwendungen im Kontakt mit Kalt und/oder Warmwasser in der Wasserversorgung, wie insbesondere Warmwasserspeicher, und in Heiz- und Kühlsystemen, insbesondere Öl-, Gas-, Holz- und Solarheizungen sowie Wärmepumpen und Raumheizungen, insbesondere für Systeme im Automobilbau, wie Kühlwasserpumpen, insbesondere eines Formkörpers zur Förderung und/oder Aufbewahrung von Trinkwasser bei erhöhten Temperaturen bevorzugtermassen im Bereich von oder oberhalb von 80°C, insbesondere Rohr, Armatur, Haushaltsgerät, Heisswasserbereiter, Reiskocher, Dampfgarer, Dampfbügeleisen, Fitting, Gehäuse, Mischer, Hahn, Filtergehäuse, Wasserzähler, Wasserzählerkomponente (Lager, Propeller, Pilone), Ventil, Ventilkomponente (Gehäuse, Absperrkugel, Schieber, Zylinder), Verteiler, Kartusche, Pumpe, Pumpenkomponente (z.B. Schaufelräder, Impeller), Leitung oder Behälter respektive Bestandteil oder Element davon.

## Claims

1. Polyamide moulding composition made of the following constituents:
(A) from 25 to 74.9% by weight of at least one semicrystalline, semiaromatic nylon-6T/6I, composed of:
(a1) from 65 to 82 mol% of terephthalic acid, based on the entirety of the dicarboxylic acids used;
(a2) from 18 to 35 mol% of isophthalic acid, based on the entirety of the dicarboxylic acids used;
(a3) 1,6-diaminohexane;
(a4) at least one monobasic carboxylic acid;
(a5) from 40 to 400 ppm of phosphorus, based on the mass of the anhydrous input weight of the entirety of the components (a1) to (a5), in the form of a phosphorus compound;
with the first proviso that the molar ratio of the component (a3) to the entirety of the dicarboxylic acids used ((a1) + (a2)) is at least 1.04 and at most 1.10;
and with the second proviso that the molar ratio of the component (a4) to the component (a3) is in the range from 0.01 to 0.08;
(B) from 25 to 60% by weight of fibrous reinforcing materials;
(C) from 0 to 30% by weight of particulate fillers, optionally in surface-treated form, selected from the group consisting of: talc, mica, silicate, quartz, titanium dioxide, wollastonite, kaolin, amorphous silicas, magnesium carbonate, magnesium hydroxide, chalk, lime, feldspar, barium sulphate, solid or hollow glass beads, ground glass, permanently magnetic or magnetizable metal compounds and/or alloys, and also mixtures of the members of this group;
(D) from 0.1 to 2% by weight of heat stabilizers, with the proviso that no copper-containing stabilizers are present therein;
(E) from 0 to 2% by weight of carbon black;
(F) from 0 to 4% by weight of auxiliaries and/or additives differing from C, D and E;
where the entirety of the components (A)-(E) makes up 100% by weight.

2. Polyamide moulding composition according to Claim 1, **characterized in that** the molar ratio of the component (a3) to the entirety of the dicarboxylic acids used ((a1) + (a2)) is in the range from 1.045 to 1.10, preferably in the range from 1.05 to 1.08, with particular preference in the range from 1.055 to 1.075.

3. Polyamide moulding composition according to any of the preceding claims, **characterized in that** the molar ratio of the component (a4) to the component (a3) is in the range from 0.01 to 0.08, preferably in the range from 0.012 to 0.050 or in the range from 0.014 to 0.030, with particular preference in the range from 0.015 to 0.025,
and/or **in that** the proportion of the component (a4), based on the diamine excess, meaning the difference between the proportion of the component (a3) in mol and the proportion of the entirety of the diacid components (a1) and (a2) in mol, is in the range from 15 to 100 mol%, preferably in the range from 20 to 80 mol%, with particular preference in the range from 25 to 50 mol%.

4. Polyamide moulding composition according to any of the preceding claims, **characterized in that** the component (A) comprises, as component (a1), from 68 to 78 mol% of terephthalic acid, preferably from 69 to 75 mol% of terephthalic acid, based on the entirety of the dicarboxylic acids used ((a1) + (a2)).

5. Polyamide moulding composition according to any of the preceding claims, **characterized in that** the component (A) comprises, as component (a5), a phosphorus compound preferably in the form of a phosphoric acid, of a phosphorous acid, of a hypophosphorous acid, or phenylphosphonic acid, phenylphosphinic acid and/or salts thereof with mono- to trivalent cations and/or esters thereof, for example in particular triphenyl phosphate, triphenyl phosphite or tris(nonylphenyl) phosphite or a mixture thereof, where the phosphorus content of this component (a5), based on the anhydrous mixture, meaning the sum of all of the input weights for component (A) without water, is in the range from 60 to 300 ppm and with particular preference in the range from 70 to 150 ppm.

6. Polyamide moulding composition according to any of the preceding claims, **characterized in that** the monobasic carboxylic acid of the component (a4) is an aliphatic or cycloaliphatic or aromatic monocarboxylic acid, where the monobasic carboxylic acid is preferably selected from the group consisting of: acetic acid, propionic acid, butyric acid, valeric acid, caproic acid, lauric acid, stearic acid, 2-ethylhexanoic acid, cyclohexanoic acid and benzoic acid and mixtures thereof.

7. Polyamide moulding composition according to any of the preceding claims, **characterized in that** the fibrous reinforcing materials of the component (B) used take the form of glass fibres, preferably glass fibres approved for contact with food, where preferably the total quantity of processing aids comprised by the glass fibres, in particular of the size, based on the surface area of the glass fibres, does not exceed a value of 0.25 g/m², and/or the processing aids are preferably exclusively selected from the positive list according to Annex I of Regulation EU 10/2011,
and/or **in that** the proportion of the component (B) present in the polyamide moulding composition is in the range from 30 to 60% by weight, preferably in the range from 35 to 55% by weight.

8. Polyamide moulding composition according to any of the preceding claims, **characterized in that** the proportion of the component (C) present in the polyamide moulding composition is in the range of at most 20% by weight, preferably in the range of at most 10% by weight, with particular preference in the range from 0.1 to 5% by weight.

9. Polyamide moulding composition according to any of the preceding claims, **characterized in that** the heat stabilizers of the component (D) are selected from the group of the phenol-based heat stabilizers, phosphite-based heat stabilizers, amine-based heat stabilizers and mixtures and combinations thereof, where with particular preference component (D) is selected from the following group: triethylene glycol bis(3-tert-butyl-4-hydroxy-5-methylphenyl)propionate, pentaerythritol tetrakis(3-(3,5-di-tert-butyl-4-hydroxyphenyl)propionate), N,N'-hexamethylenebis[3-(3,5-di-tert-butyl-4-hydroxyphenyl)propionamide], tris(2,4-di-tert-butylphenyl) phosphite and mixtures thereof;
and/or **in that** the proportion of the component (D) present in the polyamide moulding composition is in the range from 0.1 to 1.5% by weight, with particular preference in the range from 0.2 to 1.0% by weight.

10. Polyamide moulding composition according to any of the preceding claims, **characterized in that** the carbon black of the component (E) is carbon black approved for contact with food or for the colouring of food, preferably particulate carbon black with
surface area in the range from 200 to 260 m²/g (nitrogen BET (Brunauer, Emmett, Teller)),
or total arsenic content of no more than 3 mg/kg,
or total lead content of no more than 10 mg/kg,
or total mercury content of no more than 1 mg/kg,
or total sulphur content of no more than 0.65%,
or total content of polycyclic aromatic hydrocarbon (PAH) of no more than 0.5 mg/kg,
or total content of benzo[e]pyrene of no more than 0.005 mg/kg or total content of dibenz[a,h]anthracene of no more than 0.005 mg/kg or a combination of a plurality of these properties;
and/or **in that** the proportion of the component (E) in the moulding composition is in the range from 0.1 to 1.5% by weight, preferably in the range from 0.4 to 1.0% by weight.

11. Polyamide moulding composition according to any of the preceding claims, **characterized in that** the auxiliaries and/or additives of the component (F) are selected from the following group: aliphatic polyamides, crystallization accelerators and crystallization retarders, flow aids, lubricants, mould-release agents, pigments, dyes and marking substances, processing aids, antistatic agents, residues from polymerization processes, for example catalysts, salts and derivatives thereof, where the component (F) is preferably free from semiaromatic polyamides, in particular from amorphous semiaromatic polyamides such as nylon-6,I/6,T,
and/or **in that** the proportion of the component (F) in the moulding composition is in the range from 0.1 to 3% by weight, preferably in the range from 0.2 to 2% by weight.

12. Polyamide moulding composition according to any of the preceding claims, **characterized in that** the polyamide moulding composition processed to give a moulding, preferably via injection moulding, extrusion or blow moulding, is designed for the storage or conveying of drinking water at temperatures above 80°C, preferably at temperatures above 85°C±2°C, where the total concentration of dissolved organic carbon at the seventh extraction here with particular preference does not exceed a migration rate value of 12.5 mg C/m²d.

13. Moulding, preferably produced via injection moulding, extrusion or blow moulding, for conveying and/or storage of drinking water or for uses in contact with cold and/or warm water in water-supply systems, for example in particular warm water tanks, and in heating and cooling systems, in particular oil-, gas-, and wood-burning and solar heating systems, and also heat pumps and space-heating systems, in particular for systems in automobile construction, for example cooling-water pumps, in particular moulding for conveying and/or storage of drinking water at elevated temperatures preferably in the region of and above 80°C, in particular pipe, fitting, domestic device, water heater, rice cooker, steam cooker, steam iron, housing, mixer, tap, filter casing, water meter, water meter component (bearings, propellers, pins), valve, valve component (housing, shut-off ball, slide, cylinder), distributor, cartridge, pump, pump component (e.g. turbine wheels, impellors), line or container or constituent or element thereof, produced with use of a moulding composition according to any of Claims 1 to 12.

14. Moulding according to Claim 13, **characterized in that** at least one region, preferably in the form of a coating or of a section, has substantially direct exposure to the drinking water during correct use.

15. Use of a polyamide moulding composition according to any of Claims 1 to 12 for the production of a moulding, in particular of a component for conveying and/or storage of drinking water or for uses in contact with cold and/or warm water in water-supply systems, for example in particular warm water tanks, and in heating and cooling systems, in particular oil-, gas-, and wood-burning and solar heating systems, and also heat pumps and space-heating systems, in particular for systems in automobile construction, for example cooling-water pumps, in particular a moulding for conveying and/or storage of drinking water at elevated temperatures preferably in the region of and above 80°C, in particular pipe, fitting, domestic device, water heater, rice cooker, steam cooker, steam iron, housing, mixer, tap, filter casing, water meter, water meter component (bearings, propellers, pins), valve, valve component (housing, shut-off ball, slide, cylinder), distributor, cartridge, pump, pump component (e.g. turbine wheels, impellors), line or container or constituent or element thereof.

## Revendications

1. Matière à mouler à base de polyamide, constituée des composants suivants :
(A) 25 - 74,9 % en poids d'au moins un polyamide partiellement aromatique, partiellement cristallin 6T/6I, formé à partir de:
(a1) 65 à 82 % en moles d'acide téréphtalique, par rapport à la somme des acides dicarboxyliques utilisés ;
(a2) 18 à 35 % en moles d'acide isophtalique, par rapport à la somme des acides dicarboxyliques utilisés ;
(a3) 1,6-diaminohexane ;
(a4) au moins un acide carboxylique monofonctionnel ;
(a5) 40 à 400 ppm de phosphore, en masse par rapport à la pesée initiale anhydre de la somme des composants (a1) à (a5), sous forme d'un composé de phosphore ;
avec la première condition que le rapport molaire du composant (a3) à la somme des acides dicarboxyliques ((a1) + (a2)) utilisés soit d'au moins 1,04 et d'au maximum 1,10 ;
et avec la deuxième condition que le rapport molaire du composant (a4) au composant (a3) se situe dans la plage de 0,01-0,08 ;
(B) 25 - 60 % en poids de matières fibreuses de renforcement ;
(C) 0 - 30 % en poids de charges particulaires, éventuellement sous forme traitée en surface, choisies dans le groupe constitué par le talc, le mica, un silicate, le quartz, le dioxyde de titane, la wollastonite, le kaolin, les silices amorphes, le carbonate de magnésium, l'hydroxyde de magnésium, la craie, la chaux, le feldspath, le sulfate de baryum, des billes verre pleines ou creuses, le verre pilé, des alliages et/ou des composés métalliques magnétisables ou magnétiques permanents, ainsi que des mélanges des éléments de ce groupe ;
(D) 0,1 - 2 % en poids de stabilisants thermiques, étant entendu qu'aucun stabilisant contenant du cuivre n'y est contenu ;
(E) 0 - 2 % en poids de noir de carbone ;
(F) 0 - 4 % en poids d'adjuvants et/ou d'additifs, différents de C, D et E ;
la somme des composants (A) - (E) étant égale à 100 % en poids.

2. Matière à mouler à base de polyamide selon la revendication 1, **caractérisée en ce que** le rapport molaire du composant (a3) à la somme des acides dicarboxyliques ((a1) + (a2)) utilisés se situe dans la plage de 1,045-1,10, de préférence dans la plage de 1,05-1,08, de façon particulièrement préférée dans la plage de 1,055-1,075.

3. Matière à mouler à base de polyamide selon l'une quelconque des revendications précédentes, **caractérisée en ce que** le rapport molaire du composant (a4) au composant (a3) se situe dans la plage de 0,01-0,08, de préférence dans la plage de 0,012-0,050 ou dans la plage de 0,014-0,030, de façon particulièrement préférée dans la plage de 0,015-0,025,
et/ou **en ce que** la proportion du composant (a4) par rapport à l'excès de diamine, entendu comme différence entre la proportion du composant (a3) en moles et la proportion de la somme des composants diacides (a1) et (a2) en moles, se situe dans la plage de 15 à 100 % en moles, de préférence dans la plage de 20-80 % en moles, de façon particulièrement préférée dans la plage de 25 à 50 % en moles.

4. Matière à mouler à base de polyamide selon l'une quelconque des revendications précédentes, **caractérisée en ce que** le composant (A) contient en tant que composant (a1) 68 à 78 % en moles d'acide téréphtalique, de préférence 69 à 75 % en moles d'acide téréphtalique, par rapport à la somme des acides dicarboxyliques ((a1) + (a2)) utilisés.

5. Matière à mouler à base de polyamide selon l'une quelconque des revendications précédentes, **caractérisée en ce que** le composant (A) contient en tant que composant (a5) un composé de phosphore, de préférence sous forme d'un acide phosphorique, acide phosphoreux, acide hypophosphoreux, acide phénylphosphonique, acide phénylphosphinique et/ou de leurs sels avec des cations mono- à trivalents et/ou de leurs esters, tels qu'en particulier le phosphate de triphényle, le phosphite de triphényle ou le phosphite de tris-(nonylphényle) ou de mélanges de ceux-ci, la teneur en phosphore de ce composant (a5) se situant, par rapport à la charge anhydre, entendue comme somme de tous les pesées initiales pour le composant (A) sans eau, dans la plage de 60 - 300 ppm et de façon particulièrement préférée dans la plage de 70 à 150 ppm.

6. Matière à mouler à base de polyamide selon l'une quelconque des revendications précédentes, **caractérisée en ce que** l'acide carboxylique monofonctionnel du composant (a4) est un acide monocarboxylique aliphatique ou cycloaliphatique ou aromatique, l'acide carboxylique monofonctionnel étant choisi de préférence dans le groupe constitué par : l'acide acétique, l'acide propionique, l'acide butyrique, l'acide valérique, l'acide caproïque, l'acide laurique, l'acide stéarique, l'acide 2-éthyl-hexanoïque, l'acide cyclohexanecarboxylique et l'acide benzoïque, ou des mélanges de ceux-ci.

7. Matière à mouler à base de polyamide selon l'une quelconque des revendications précédentes, **caractérisée en ce que** les matières fibreuses de renforcement du composant (B) sont utilisées sous forme de fibres de verre, de préférence sous forme de fibres de verre approuvées pour le contact avec des denrées alimentaires, de préférence la quantité totale d'adjuvants de mise en oeuvre des fibres de verre, en particulier de l'ensimage, par rapport à la surface des fibres de verre, n'excédant pas une valeur de 0,25 g/m² et/ou les adjuvants de mise en oeuvre étant de préférence choisis exclusivement dans la liste positive selon l'annexe I du règlement de l'UE 10/2011,
et/ou **en ce que** le composant (B) est présent dans la matière à mouler à base de polyamide en une proportion dans la plage de 30-60 % en poids, de préférence dans la plage de 35-55 % en poids.

8. Matière à mouler à base de polyamide selon l'une quelconque des revendications précédentes, **caractérisée en ce que** le composant (C) est présent en une proportion dans la plage d'au maximum 20 % en poids, de préférence dans la plage d'au maximum 10 % en poids, de façon particulièrement préférée dans la plage de 0,1-5 % en poids.

9. Matière à mouler à base de polyamide selon l'une quelconque des revendications précédentes, **caractérisée en ce que** les stabilisants thermiques du composant (D) sont choisis dans le groupe des stabilisants thermiques à base de phénols, des stabilisants thermiques à base de phosphites, des stabilisants thermiques à base d'amines, ou mélanges ou associations de ceux-ci, de façon particulièrement préférée le composant (D) étant choisi dans le groupe suivant : bis(3-tert-butyl-4-hydroxy-5-méthylphényl)-propionate de triéthylèneglycol, tétrakis(3-(3,5-di-tert-butyl-4-hydroxyphényl)propionate) de pentaérythritol, N,N'-hexaméthylène-bis[3-(3,5-di-tert-butyl-4-hydroxyphényl)propionamide], phosphite de tris(2,4-di-tert-butylphényle), ou mélanges de ceux-ci ;
et/ou **en ce que** le composant (D) est présent dans la matière à mouler à base de polyamide en une proportion dans la plage de 0,1-1,5 % en poids, de façon particulièrement préférée dans la plage de 0,2-1,0 % en poids.

10. Matière à mouler à base de polyamide selon l'une quelconque des revendications précédentes, **caractérisée en ce que** pour ce qui est du noir de carbone du composant (E) il s'agit de noir de carbone approuvé pour contact avec des denrées alimentaires ou pour la coloration de produits alimentaires, de préférence de noir de carbone particulaire ayant une surface dans la plage de 200 - 260 m²/g (azote BET (Brunauer, Emmett, Teller)),
ou une teneur totale en arsenic n'excédant pas 3 mg/kg,
ou une teneur totale en plomb n'excédant pas 10 mg/kg,
ou une teneur totale en mercure n'excédant pas 1 mg/kg,
ou une teneur totale en soufre n'excédant pas 0,65 %,
ou une teneur totale en hydrocarbure aromatique polycyclique (HAP) n'excédant pas 0,5 mg/kg,
ou une teneur totale en benzo[e]pyrène n'excédant pas 0,005 mg/kg,
ou une teneur totale en dibenzo[a,h]anthracène n'excédant pas 0,005 mg/kg,
ou une combinaison de plusieurs de ces propriétés et/ou **en ce que** la proportion du composant (E) dans la matière à mouler se situe dans la plage de 0,1-1,5 % en poids, de préférence dans la plage de 0,4-1,0 % en poids.

11. Matière à mouler à base de polyamide selon l'une quelconque des revendications précédentes, **caractérisée en ce que** les adjuvants et/ou additifs du composant (F) sont choisis dans le groupe suivant : polyamides aliphatiques, accélérateurs ou ralentisseurs de cristallisation, adjuvants d'écoulement, lubrifiants, agents de démoulage, pigments, substances colorantes et de marquage, adjuvants de mise en oeuvre, agents antistatiques, résidus de processus de polymérisation, tels que catalyseurs, sels et leurs dérivés, le composant (F) étant de préférence exempt de polyamides partiellement aromatiques, en particulier de polyamides partiellement aromatiques amorphes tels que le polyamide 6I/6T,
et/ou **en ce que** la proportion du composant (F) dans la matière à mouler se situe dans la plage de 0,1-3 % en poids, de préférence dans la plage de 0,2-2 % en poids.

12. Matière à mouler à base de polyamide selon l'une quelconque des revendications précédentes, **caractérisée en ce que** la matière à mouler à base de polyamide, lorsqu'elle est transformée en un corps moulé, de préférence par moulage par injection, extrusion ou moulage par soufflage, est conçue pour le stockage ou le transport d'eau potable à des températures de plus de 80 °C, de préférence à des températures de plus de 85 °C ± 2 °C, en ce cas de façon particulièrement préférée la concentration totale de carbone organique dissous lors de la septième extraction n'excédant pas une valeur de la vitesse de migration de 12,5 mg C/m²d.

13. Corps moulé, de préférence produit par moulage par injection, extrusion ou moulage par soufflage, destiné au transport et/ou au stockage d'eau potable ou pour des utilisations en contact avec de l'eau chaude et/ou de l'eau froide dans l'approvisionnement en eau, comme en particulier des réservoirs d'eau chaude, et dans des systèmes de chauffage et de refroidissement, en particulier des chauffages à huile, au gaz, au bois ou solaires ainsi que des pompes à chaleur et des chauffages d'espaces, en particulier pour des systèmes dans la construction d'automobiles, tels que des pompes à eau de refroidissement, en particulier corps moulé destiné au transport et/ou au stockage d'eau potable à des températures élevées, de préférence dans la plage de ou au-dessus de 80 °C, en particulier tube, robinetterie, appareil ménager, chauffe-eau, cuiseur à riz, cuiseur-vapeur, fer à repasser à vapeur, raccord, carrosserie, mélangeur, robinet, boîtier de filtre, compteur d'eau, composant de compteur d'eau (palier, hélice, pylône), vanne, composant de vanne (boîtier, bille de retenue, robinet-vanne, cylindre), distributeur, cartouche, pompe, composant de pompe (par exemple roues à ailettes, turbine), conduit ou récipient ou respectivement constituant ou élément de ceux-ci, fabriqué avec utilisation d'une matière à mouler selon l'une quelconque des revendications 1-12.

14. Corps moulé selon la revendication 13, **caractérisé en ce qu'**au moins une zone, de préférence sous forme d'un revêtement ou d'une partie, est essentiellement directement exposée à l'eau potable lors de l'utilisation conforme.

15. Utilisation d'une matière à mouler à base de polyamide selon l'une quelconque des revendications 1-12 pour la production d'un corps moulé, en particulier d'une pièce de construction destinée au transport et/ou au stockage d'eau potable ou pour des utilisations en contact avec de l'eau chaude et/ou de l'eau froide dans l'approvisionnement en eau, comme en particulier des réservoirs d'eau chaude, et dans des systèmes de chauffage et de refroidissement, en particulier des chauffages à huile, au gaz, au bois ou solaires ainsi que des pompes à chaleur et des chauffages d'espaces, en particulier pour des systèmes dans la construction d'automobiles, tels que des pompes à eau de refroidissement, en particulier d'un corps moulé destiné au transport et/ou au stockage d'eau potable à des températures élevées, de préférence dans la plage de ou au-dessus de 80 °C, en particulier tube, robinetterie, appareil ménager, chauffe-eau, cuiseur à riz, cuiseur-vapeur, fer à repasser à vapeur, raccord, carrosserie, mélangeur, robinet, boîtier de filtre, compteur d'eau, composant de compteur d'eau (palier, hélice, pylône), vanne, composant de vanne (boîtier, bille de retenue, robinet-vanne, cylindre), distributeur, cartouche, pompe, composant de pompe (par exemple roues à ailettes, turbine), conduit ou récipient ou respectivement constituant ou élément de ceux-ci.
